# EUROPEAN PATENT SPECIFICATION

(11) **EP 3 846 358 B1**
(45) Date of publication and mention of the grant of the patent: **06.09.2023**
(21) Application number: 20215317.7
(22) Date of filing: 18.12.2020
(51) Int. Cl.: H04B 7/185

(54) **SYSTEM AND METHOD FOR CALIBRATING AN ANTENNA**
SYSTEM UND VERFAHREN ZUR KALIBRIERUNG EINER ANTENNE
SYSTÈME ET PROCÉDÉ D'ÉTALONNAGE D'UNE ANTENNE

(30) Priority: 06.01.2020 US 202016734939
(43) Date of publication of application: 07.07.2021
(73) Proprietor: The Boeing Company, Arlington, VA 22202 (US)
(72) Inventor: HA, Tuan, Chicago, Illinois 60606 (US)
(74) Representative: Sandri, Sandro

(56) References cited:
- EP-A1- 3 279 694
- WO-A1-2015/123623
- WO-A2-2008/048807

## Description

### Field of the Disclosure

The present disclosure is directed to a method for calibrating an antenna located on a spacecraft. More particularly, the present disclosure is directed to a method for performing point calibration for a phase-array antenna in orbit. Furthermore, the present disclosure is directed to a computing system used to calibrate an antenna located on a spacecraft.

### Background

Spacecrafts such as satellites have an antenna for communication purposes. The antenna cannot be aligned perfectly on the ground. Thus, the antenna is typically aligned after the spacecraft is launched into space (e.g., orbit). More particularly, the alignment of the antenna may be calibrated to reduce alignment errors such as fixed alignment errors. As used herein, a "fixed alignment error" refers to a transformation error between two coordinate systems. In an example, the first coordinate system may be a star-tracker coordinate system on the spacecraft, which determines the attitude of the spacecraft. The second coordinate system may be a phase array antenna coordinate system (e.g., on the spacecraft).

Conventional calibration techniques may include antenna beam cuts that involve slewing the antenna and then correlating the measurements from the antenna to predetermined beam patterns. However, slewing the antenna while performing antenna beam cuts is a time-consuming procedure. Therefore, it would be desirable to have an improved system and method for calibrating an antenna.

Document WO 2015/123623 A1 describes a system and method for providing broadband internet access to homes and enterprises using a network of aerial platforms such as drones/UAVs/balloons. Drones form and point beams toward ground terminals in different areas in a space division multiple access scheme. Ground terminals search for the drone from which they receive the strongest signals. Drone and ground terminals comprise of methods and systems to calibrate receive and transmit antenna elements. Drone radio sub-system keeps track of the drone's position and orientation changes and adjust drone's antenna beam accordingly to point to the same location on the ground as the drone moves. Depending on the changes in drone's position and orientation, the drone radio subsystem may switch the antenna aperture and/or the antenna fixture that is used to form a beam toward a specific ground terminal. Drones communicate with the terminals using a space and time division multiple access scheme.

Document 2008/048807 A2 discloses methods and systems for calibrating the return and forward links of a satellite communication system. The phase and/or amplitude variations caused by the return and forward links are calculated and/or estimated to aid in beamforming, such as ground-based beamforming. Calibration earth stations, distributed within one or more beam patterns, may be used to transmit calibration codes to the gateway to calibrate the return link. Return links variations may be estimated using a weighted minimum mean square algorithm at the gateway. Forward links may be calibrated with calibration codes transmitted from the gateway through a hybrid matrix to at least one calibration station. Forward calibration links may also calibrate for temperature-dependent signal variations such as diplexer variations at the satellite.

Document EP 3279694 A1 discloses systems, methods and apparatus for multichannel satellite calibration. In one aspect, a calibration system can provide a transmit calibration signal based on a reference calibration signal to a satellite. The satellite can transmit back a receive calibration signal that can be obtained by the calibration system. Sub-carriers of the receive calibration signal can be compared with sub-carriers of the reference signal to determine adjustments to transmission properties of antennas of the satellite.

### SUMMARY

The present disclosure relates to a method having the features described at claim 1. The dependent claims 2-9 outline advantageous ways for carrying out the method. Furthermore, the present disclosure relates to a computing system having the features described at claim 11. The depending claims 12-15 advantageous forms of embodiment of the system.

### BRIEF DESCRIPTION OF THE DRAWINGS

The accompanying drawings, which are incorporated in and constitute a part of this specification, illustrate aspects of the present teachings and together with the description, serve to explain the principles of the present teachings.
Figure 1 illustrates a perspective view of a spacecraft, according to an implementation.
Figure 2 illustrates a graph showing a pointing error (in degrees) of a transmitter antenna (on the spacecraft) versus time over the course of a single day.
Figure 3 illustrates a graph showing a pointing error spatial simulation of the transmitter antenna and the receiver antenna.
Figure 4 illustrates a graph of the element locations from Figure 3 looking downward along the Z-axis in the graph.
Figure 5 illustrates a flowchart of a method for calibrating the transmitter antenna.
Figure 6 illustrates a graph of the phase tilt of phase array elements of the transmitter antenna with a physical delay variation caused by an array element pointing alignment error of the transmitter antenna (e.g., physical misalignment) and a digital delay variation caused by a digital signal processor (DSP) delay error.
Figure 7 illustrates a graph of the phase tilt of the phase array elements of the transmitter antenna with the DSP delay error (from Figure 6) removed.
Figure 8A illustrates a graph showing the estimated phase tilt (in degrees) versus the location of the phase array elements of the transmitter antenna (in meters).
Figure 8B illustrates a table showing the azimuth error (in degrees), the elevation error (in degrees), the X slope coefficient (in degrees per meter), the Y slope coefficient (in degrees per meter), the delta X coefficient (in degrees per meter), and the delta Y coefficient (in degrees per meter).
Figure 9 illustrates a graph of the reference slope matrix for the phase array elements of the transmitter antenna.
Figure 10 illustrates a graph showing a phase tilt matrix correlation.
Figure 11 illustrates a graph that represents an enlarged portion of the graph in Figure 10.
Figure 12A illustrates a table showing the pointing error of the transmitter antenna and the pointing error of the receiver antenna with a phase measurement error of 2 degrees root-mean-square (RMS) only.
Figure 12B illustrates a table showing the pointing error of the transmitter antenna and the pointing error of the receiver antenna with a phase measurement error of 6 degrees RMS, a position knowledge error of 50 meters RMS, and an attitude knowledge error of 0.005 degrees RMS.
Figure 13A illustrates a graph showing the residual pointing error (in degrees) versus gateway latitude (in degrees) for the transmitter antenna.
Figure 13B illustrates a graph showing the residual pointing error (in degrees) versus gateway latitude (in degrees) for the receiver antenna.
Figure 14 illustrates a schematic view of a computing system for performing at least a portion of the method.

It should be noted that some details of the figures have been simplified and are drawn to facilitate understanding rather than to maintain strict structural accuracy, detail, and scale.

### DESCRIPTION

The present disclosure is directed to a system and method for performing pointing calibration of a spacecraft (e.g., an antenna in orbit) to reduce a fixed alignment error and/or an array pointing error. More particularly, the present disclosure is directed to a system and method for performing pointing calibration of a phase array antenna on the spacecraft utilizing a two-dimensional (2D) linear fit phase tilt to estimate and correct the errors. This includes obtaining measurements at two or more different spacecraft locations and/or orientations, and using the measurements to estimate the azimuth fixed error, elevation fixed error, and yaw fixed error. The method does not involve slewing the antenna. As a result, the method is performed more quickly than conventional methods that slew the antenna.

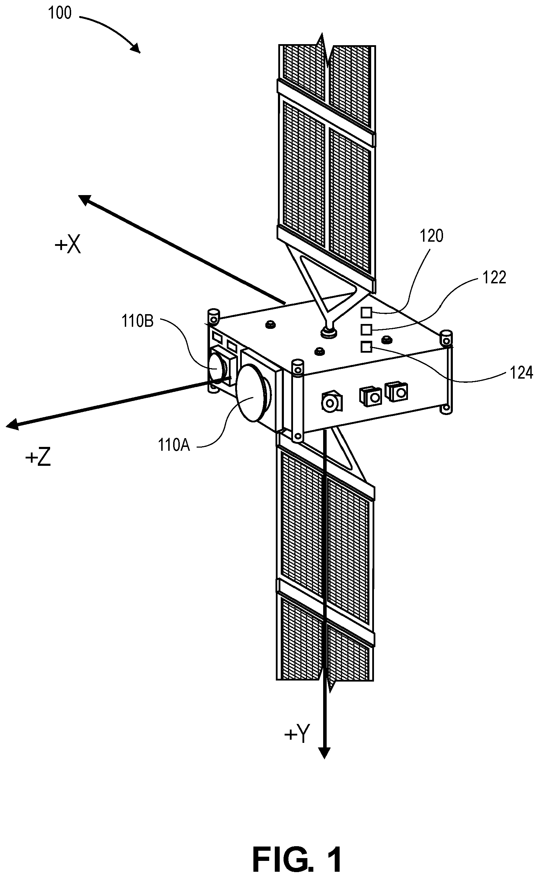

Figure 1 illustrates a perspective view of an aircraft (e.g., a spacecraft) 100, according to an implementation. The spacecraft 100 is or includes a satellite that is configured to be placed into orbit around, for example, the Earth. The spacecraft 100 is able to move (e.g., rotate) around a first axis (e.g., an X axis). This movement is referred to as a roll of the spacecraft 100. The spacecraft 100 is also able to move (e.g., rotate) around a second axis (e.g., a Y axis). This movement is referred to as a pitch of the spacecraft 100. The spacecraft 100 is also able to move (e.g., rotate) around a third axis (e.g., a Z axis). This movement is referred to as a yaw of the spacecraft 100.

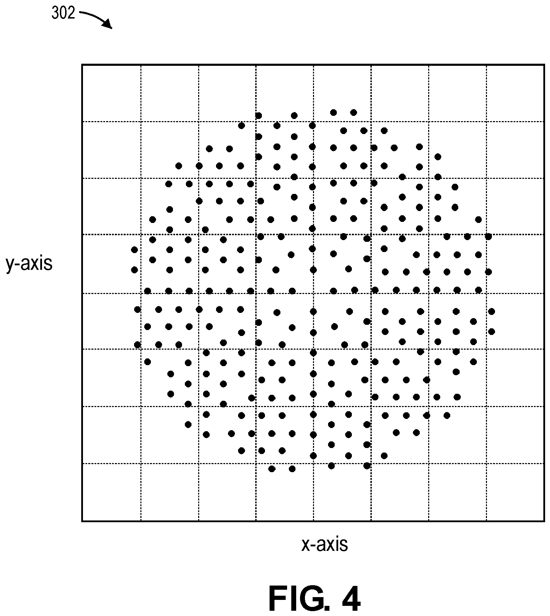

The spacecraft 100 includes a transmitter antenna 110A and a receiver antenna 110B. The transmitter antenna 110A and the receiver antenna 110B are or include phase array antennas. The transmitter antenna 110A and the receiver antenna 110B may each include a plurality of phase array elements in a predefined pattern (as shown in Figure 4).

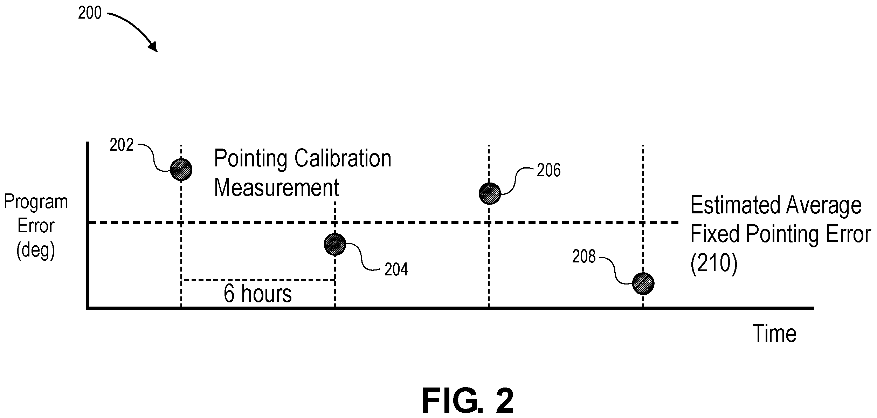

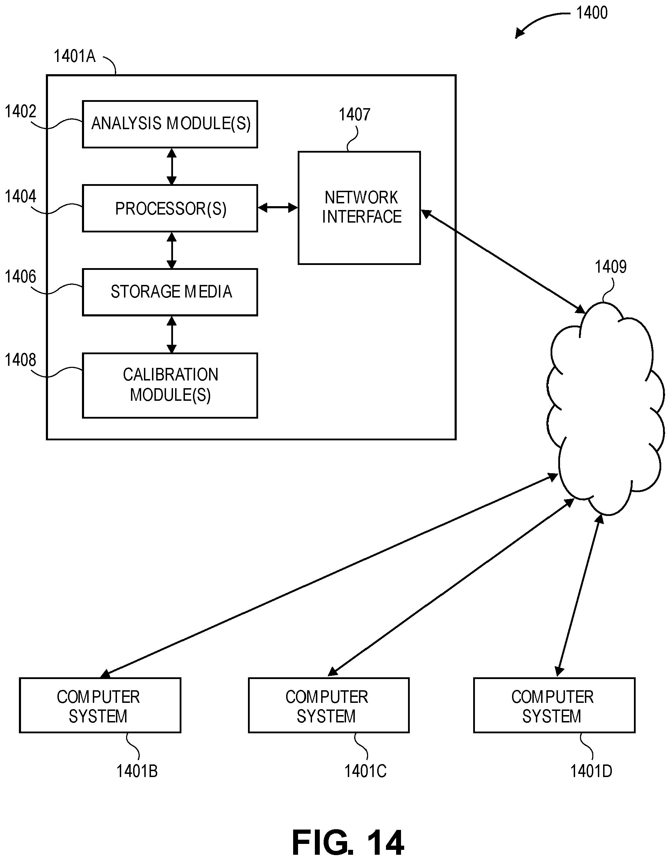

Figure 2 illustrates a graph 200 showing a pointing error (in degrees) of the transmitter antenna 110A versus time over the course of a single day. The spacecraft 100 may pass overhead of a gateway on Earth one or more times during the day. For example, the spacecraft 100 may pass over the gateway four times a day (e.g., every 6 hours). As used herein, a "gateway" refers to a ground terminal that is configured to transmit signals to the spacecraft 100, receive signals from the spacecraft 100, and process the signals (e.g., using a computing system). A computing system 1400 that is used at the ground terminal is described below with reference to Figure 14.

The pointing error may be measured each time the spacecraft 100 passes over the gateway. In the example shown in Figure 2, there are four sets of pointing error measurements: 202, 204, 206, 208. Each set 202, 204, 206, 208 may include a plurality of measurements (e.g., 10 measurements). As may be seen, the sets of pointing error measurements 202, 204, 206, 208 may vary from time to time. For example, the pointing error of the first set 202 is greater than the pointing error of the second set 204. This may be due to temperature variations throughout the day. Thus, an average fixed pointing error 210 may be determined based upon the pointing error measurement sets 202, 204, 206, 208. The average fixed pointing error 210 may at least partially remove fixed pointing error.

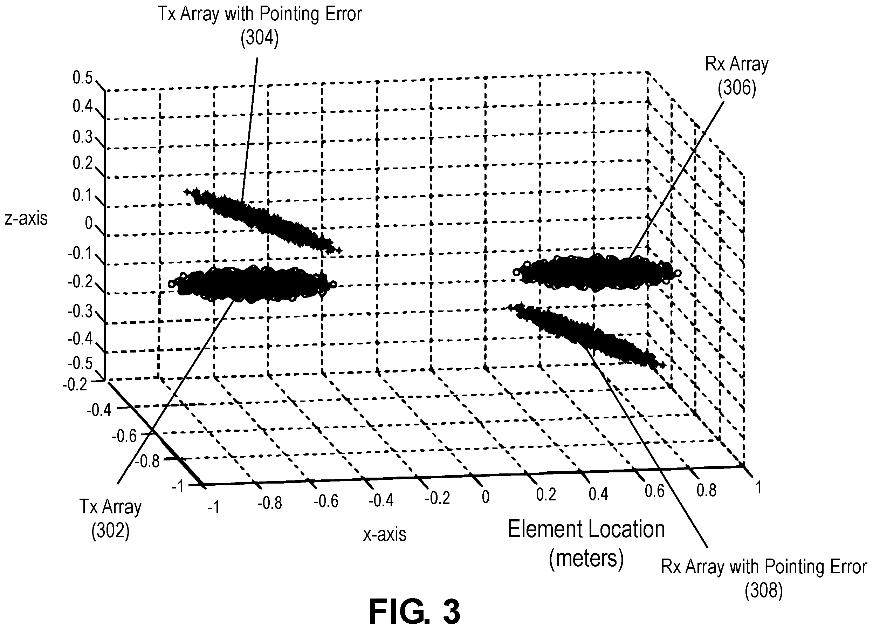

Figure 3 illustrates a graph 300 showing a pointing error spatial simulation of the transmitter antenna 110A and the receiver antenna 110B. In this example, a first set of element locations 302 and a second set of locations 304 represent the location of phase array elements of the transmitter antenna 110A. The first set of element locations 302 is without pointing error, and the second set of element locations 304 includes the pointing error. A third set of element locations 306 and a fourth set of element locations 308 represent the location of phase array elements of the receiver antenna 110B. The third set of element locations 306 is without pointing error, and the fourth set of element locations 308 includes the pointing error.

Figure 4 illustrates a graph 400 of the element locations 302 looking downward along the Z-axis in the graph 300. As mentioned above, each element location 302 represents the location of the phase array elements of the transmitter antenna 110A. As may be seen, the element locations 302 vary along the X-axis and the Y-axis and produce a phase measurement for each element.

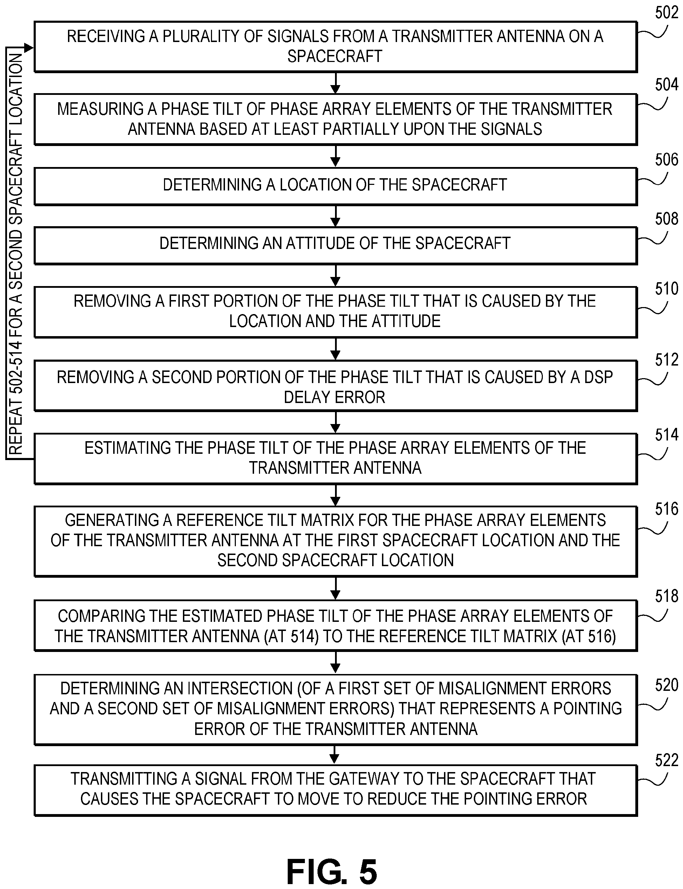

Figure 5 illustrates a flowchart of a method 500 for calibrating the transmitter antenna 110A of the spacecraft 100. The method 500 may be used to average-out diurnal-induced and/or temperature-induced alignment errors of the transmitter antenna 110A.

The method includes receiving a plurality of signals from the transmitter antenna 110A, as at 502. The signals are generated by the phase array elements of the transmitter antenna 110A. The signals are received at the gateway on the ground. For example, the signals are received by the computing system 1400 at the gateway, and the computing system 1400 measures the signals and/or determines how the transmitter antenna 110A should be calibrated based upon the signals, as described below. Each of the signals may be or include a tone at a different (e.g., unique) frequency.

The method 500 also includes measuring or determining a phase tilt (also referred to as a phase slope) of the phase array elements of the transmitter antenna 110A based at least partially upon the signals (from 502), as at 504. The phase tilt may be measured by a vector spectrum analyzer (VSA), which may be a part of (or in communication with) the computing system 1400. As used herein, the "phase tilt" refers to a linear phase change versus distance.

The method 500 also includes determining a location of the spacecraft 100 (e.g., in orbit), as at 506. The location may be measured by a location sensor (e.g., a global positioning system (GPS)) 120 on the spacecraft 100. The method 500 also includes determining an attitude of the spacecraft 100 (e.g., in orbit), as at 508. The attitude may be measured by an attitude sensor 122 on the spacecraft 100. The location and the attitude are transmitted from the spacecraft 100 to the computing system 1400 at the gateway, which makes the determinations (at 506 and 508). The location and/or the attitude are determined when the signals are generated (at 502) at the spacecraft 100 and/or received at the gateway.

The phase tilt (measured at 504) may depend at least partially upon the location of the spacecraft (determined at 506), the attitude of the spacecraft 100 (measured at 508), and a misalignment error of the transmitter antenna 110A. To isolate the misalignment error, the method 500 also includes removing a first portion of the phase tilt from the phase tilt measured at 504, as at 510. The first portion of the phase tilt is caused by the location and/or attitude of the spacecraft 100.

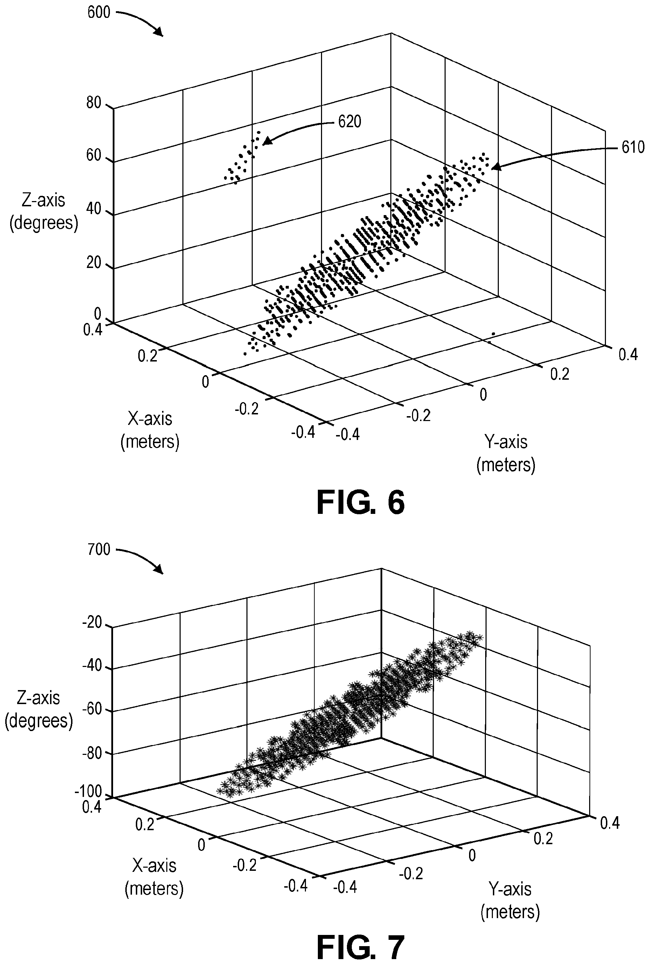

Figure 6 illustrates a graph 600 of the phase tilt of the phase array elements of the transmitter antenna 110A with a physical delay variation caused by the array element pointing alignment error of the transmitter antenna 110 (e.g., physical misalignment) 610 and a digital delay variation caused by a digital signal processor (DSP) delay error 620, according to an implementation. Thus, Figure 6 includes both the physical and digital delay variations which create the outlier measurement values (i.e., DSP delay error 620). The DSP 124 that creates the DSP delay error 620 may be onboard the spacecraft 100 (see Figure 1).

The method 500 may also include removing a second portion of the phase tilt from the phase tilt measured at 504, as at 512. The second portion of the phase tilt is caused by the DSP delay error 620. An example of this is shown in Figure 7, which illustrates a graph 700 of the phase tilt of the phase array elements of the transmitter antenna 110A with the DSP delay error 620 (from Figure 6) removed, according to an implementation. Figure 7 is similar to Figure 3, but focuses on the second set of measurements 304 (e.g., the location of the phase array elements of the transmitter antenna 110A with pointing error). Figure 7 only shows the error from physical misalignment.

The DSP 124 has a plurality of discrete states, and each state has a different (e.g., unique) digital delay variation. The digital delay variation refers to discrete steps (e.g., at some fixed interval such as 60 picoseconds (ps), 120 ps, 180 ps, etc.) based on the DSP clock frequency. When the DSP 124 is turned on/powered up, it wakes up in one of the discrete states (e.g., randomly). The DSP 124 wakes up with a random discrete step digital delay variation that is caused by an analog-to-digital converter (ADC) and/or a digital-to-analog converter (DAC) and a sampling clock.

The digital delay variation may be estimated and modified (e.g., corrected) through DSP delay buffers. However, the measurement by the computing system 1400 at the gateway of the phase across the transmitter antenna 110A may include both the physical delay variations and the digital delay variations. By plotting the modified (e.g., corrected) delay variation (e.g., using initial estimates of the discrete delay offsets, modulus of the measured element delays, and DSP discrete delay step), a user may determine whether the digital delay variation was over-estimated or underestimated. Once the phase array elements that are affected by the incorrect digital delay variations are identified, a final delay buffer setting may be determined.

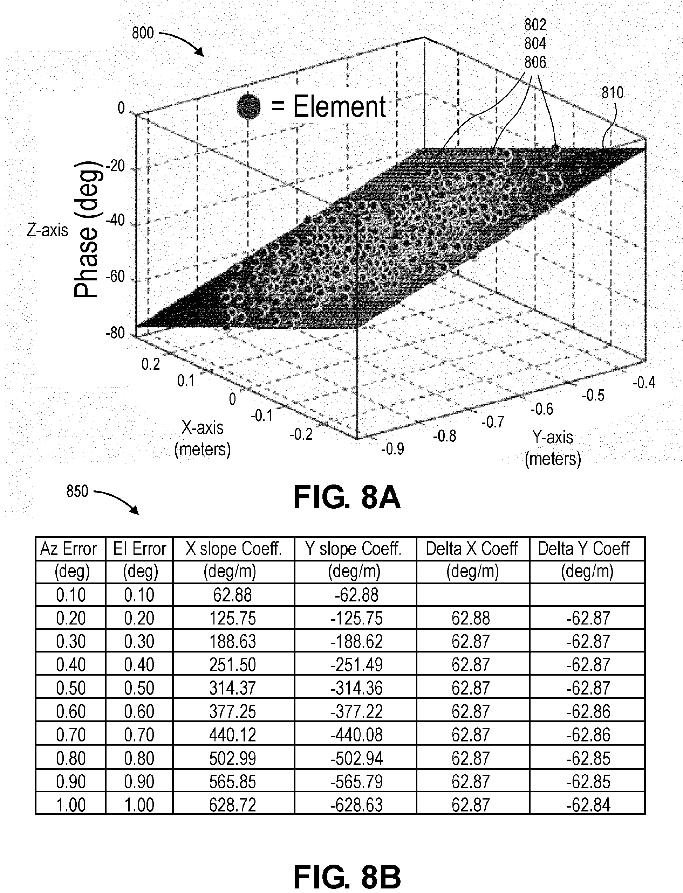

The method 500 also includes estimating the phase tilt of the phase array elements of the transmitter antenna 110A, as at 514. The phase tilt may be estimated after the first portion is removed (at 510) and/or the second portion is removed (at 512). An example of the estimated phase tilt is shown in Figure 8A, which illustrates a graph 800 showing the phase tilt (in degrees) versus the location of the phase array elements of the transmitter antenna 110A (in meters). The points (e.g., 802, 804, 806, etc.) on the graph 800 represent the phase measurement of the phase array elements. For example, each point 802, 804, 806 represent the phase measurement of the phase array elements at a different pass over the gateway. The plane 810 represents a 2D polyfit of the phase tilt of the points 802, 804, 806.

Figure 8B illustrates a table 850 showing the azimuth error (in degrees), the elevation error (in degrees), the X slope coefficient (in degrees per meter), the Y slope coefficient (in degrees per meter), the delta X coefficient (in degrees per meter), and the delta Y coefficient (in degrees per meter). These values are determined using the computing system 1400 based at least partially upon the estimated phase tilt of the phase array element elements of the transmitter antenna 110A (from 514).

There is a relative linear relationship between the estimated phase tilt of the phase array elements of the transmitter antenna 110A (from 514) and the pointing error of the transmitter antenna 110A. These linear relationships are used to translate the estimated phase tilt (from 514) into the corresponding pointing error.

The foregoing portion of the method 500 (e.g., steps 502-514) is performed a first time using data/measurements from a first spacecraft location in orbit. The foregoing portion of the method 500 (e.g., steps 502-514) is then repeated in an iterative fashion one or more times using data/measurements from one or more different spacecraft locations in orbit. For simplicity, in the following portion of the description, the steps 502-514 have been performed/repeated a second time at a second spacecraft location.

The method 500 may also include generating a reference tilt matrix for the phase array elements of the transmitter antenna 110A at the first spacecraft location and the second spacecraft location, as at 516. The reference tilt matrix may be generated based at least partially upon the first and second spacecraft locations (from two iterations of 506), the first and second spacecraft attitudes (from two iterations of 508), and the gateway location (which is constant). For example, generating the reference tilt matrix may include generating an expected phase tilt for a set of misalignment errors.

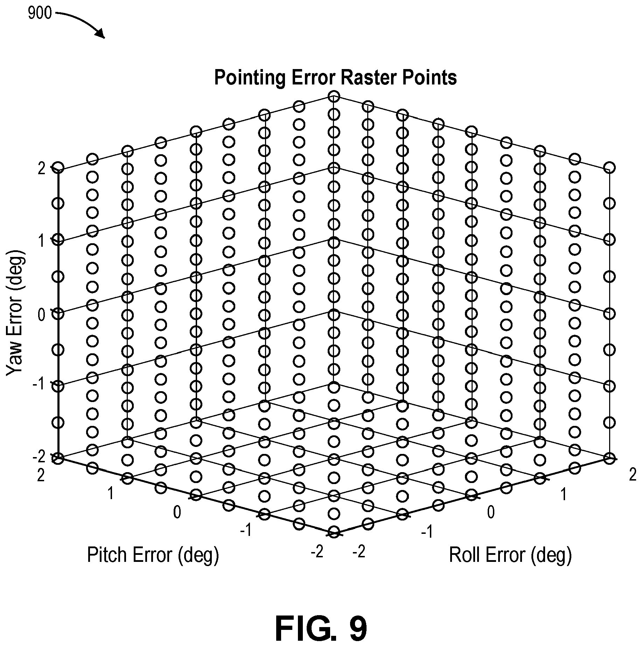

Figure 9 illustrates a graph 900 of the reference tilt matrix for the phase array elements of the transmitter antenna 110A, according to an implementation. As shown, a first axis of the graph 900 represents a roll error (in degrees), a second axis of the graph 900 represents a pitch error (in degrees), and a third axis of the graph 900 represents a yaw error (in degrees). The matrix is generated with an expected phase tilt at each 0.01 degree raster point. Four 3D matrices may be generated per array: one matrix at each of the two spacecraft locations, one matrix for the X slope, and one matrix for the Y slope. Thus, four measurements may be used to determine the three unknowns (e.g., roll, pitch, and yaw) per array.

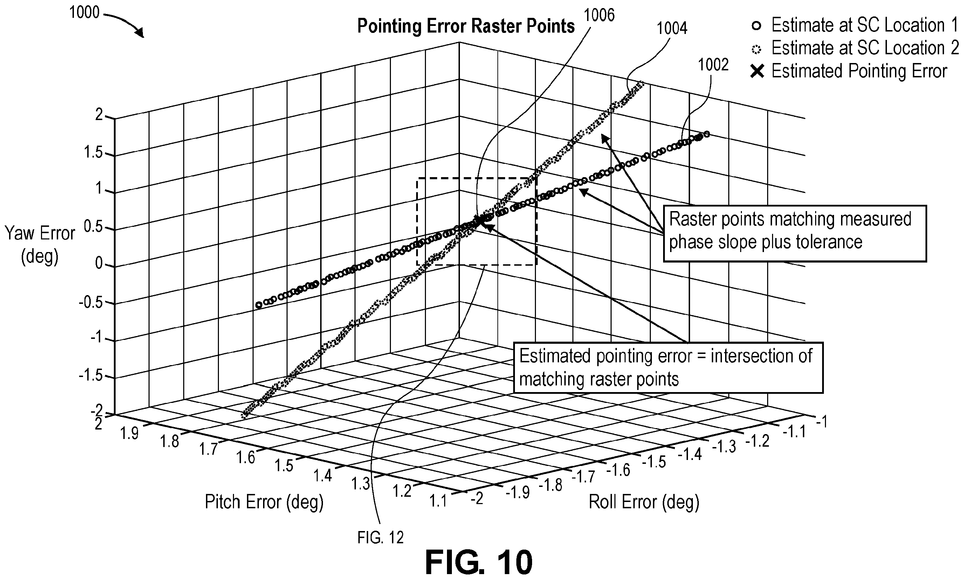

The method 500 also includes comparing the estimated phase tilt of the phase array elements of the transmitter antenna 110A (at 514) to the reference tilt matrix (at 516), as at 518. This produces a set of misalignment errors 1002 that match the estimated phase tilt for the first spacecraft location and a set of misalignment errors 1004 that match the estimated phase tilt for the second spacecraft location, as shown in Figure 10. More particularly, Figure 10 illustrates a graph 1000 showing a phase tilt matrix correlation, according to an implementation. As shown, a first axis of the graph 1000 represents a roll error (in degrees), a second axis of the graph 1000 represents a pitch error (in degrees), and a third axis of the graph 1000 represents a yaw error (in degrees). The graph 1000 represents the phase tilt matrix correlation for a single measurement (e.g., one of the ten measurements). The graph 1000 includes a plurality of raster points that make up the set of misalignment errors 1002 and the set of misalignment errors 1004. The raster points match the measured phase tilt plus a tolerance. The set of misalignment errors 1002 represents a first estimate of the location of the spacecraft 100, and the set of misalignment errors 1104 represents a second estimate of the location of the spacecraft 100. The intersection 1006 represents the estimated pointing error.

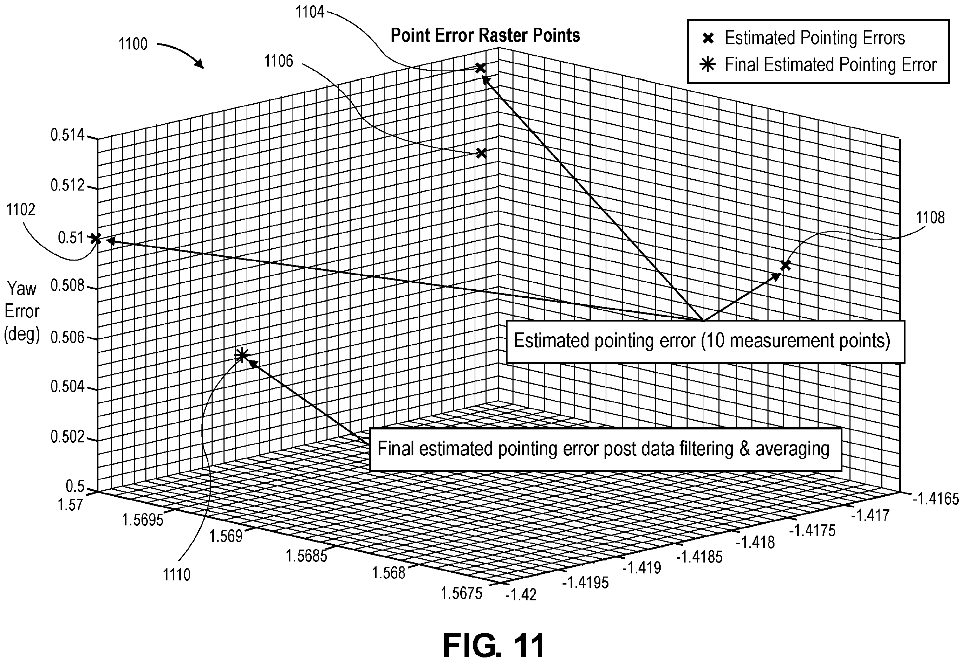

The method 500 also includes determining an intersection 1006 of first set of misalignment errors 1002 and the second set of misalignment errors 1004, as at 520. A plurality of measurements (e.g., 10 measurements) may be obtained at each spacecraft location. As a result, there may be multiple intersections. This is shown in Figure 11, which illustrates a graph 1100 that represents an enlarged portion of the graph 1000, according to an implementation. As shown, a first axis of the graph 1100 represents a roll error (in degrees), a second axis of the graph 1100 represents a pitch error (in degrees), and a third axis of the graph 1100 represents a yaw error (in degrees). The graph 1100 shows the estimated pointing errors for 10 measurements. The graph 1100 shows estimated pointing errors. The graph 1100 includes a plurality of intersections 1102, 1104, 1106, 1108, etc. that represent estimated pointing errors. The graph 1100 also shows and a final estimated pointing error 1110. The final estimated pointing error 1110 may be determined by filtering and/or averaging the estimated pointing errors 1102, 1104, 1106, 1108, etc.

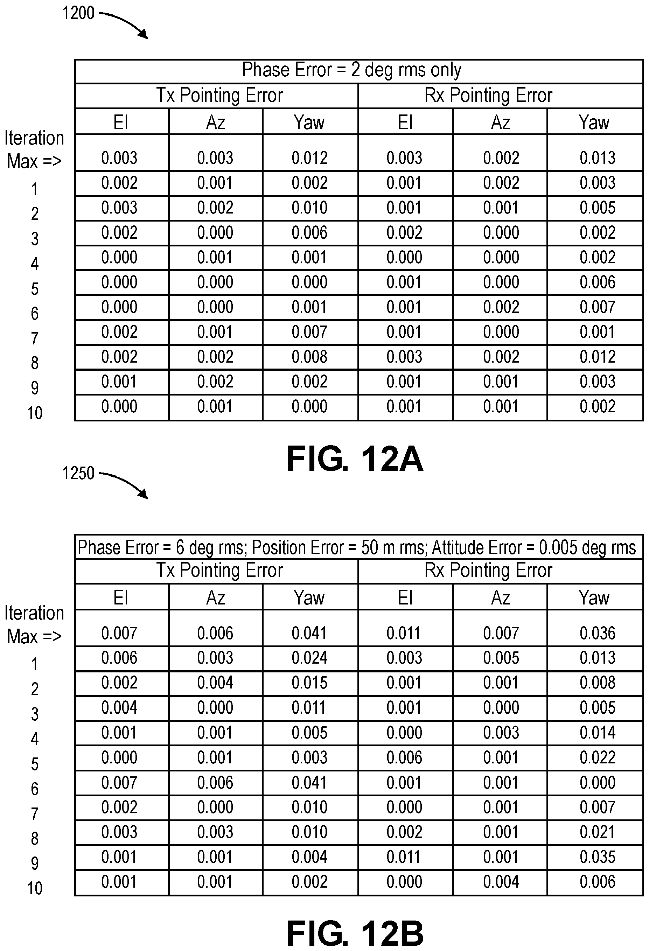

Figure 12A illustrates a table 1200 showing the pointing error of the transmitter antenna 110A and the pointing error of the receiver antenna 110B with a phase measurement error of 2 degrees root-mean-square (RMS) only, according to an implementation. The pointing error may include an elevation error, an azimuth error, and a yaw error. The values in the table 1200 may be determined during a plurality of iterations (e.g., ten) with a phase measurement error of, for example, 2 degrees root-mean-square only. Each iteration has a different fixed pointing error and spacecraft longitude. Within each iteration, a plurality (e.g., ten) measurements may be performed with random phase error on each phase array element. The top row represents the iteration maximum, which refers to the maximum residual pointing error of the simulation iterations. As may be seen in the table 1200, the maximum residual pointing error is below an illustrative pointing error target/goal, which, in this example, is 0.04 degrees elevation, 0.04 degrees azimuth, and 0.06 degrees yaw.

Figure 12B illustrates a table 1250 showing the pointing error of the transmitter antenna 110A and the pointing error of the receiver antenna 110B with a phase measurement error of 6 degrees RMS, a position knowledge error of 50 meters RMS, and an attitude knowledge error of 0.005 degrees RMS, according to an implementation. The pointing error may include an elevation error, an azimuth error, and a yaw error. The values in the table 1250 may be determined during a plurality of iterations (e.g., ten). Each iteration has a different fixed pointing error, spacecraft longitude, and spacecraft telemetry error (e.g., location and attitude). Within each iteration, a plurality (e.g., ten) measurements are performed with random phase error on each element. The top row represents the iteration maximum. As may be seen in the table 1250, the maximum residual pointing error is below the pointing error target/goal, which, in this example, is 0.04 degrees elevation, 0.04 degrees azimuth, and 0.06 degrees yaw.

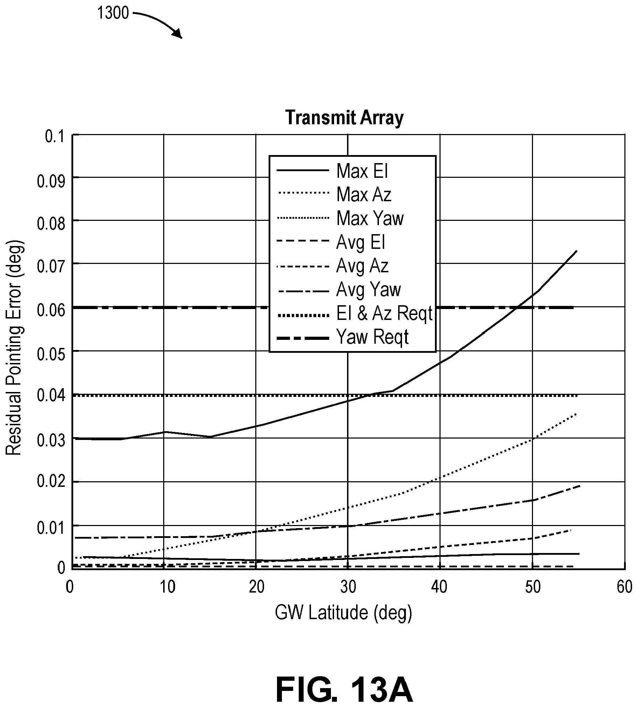

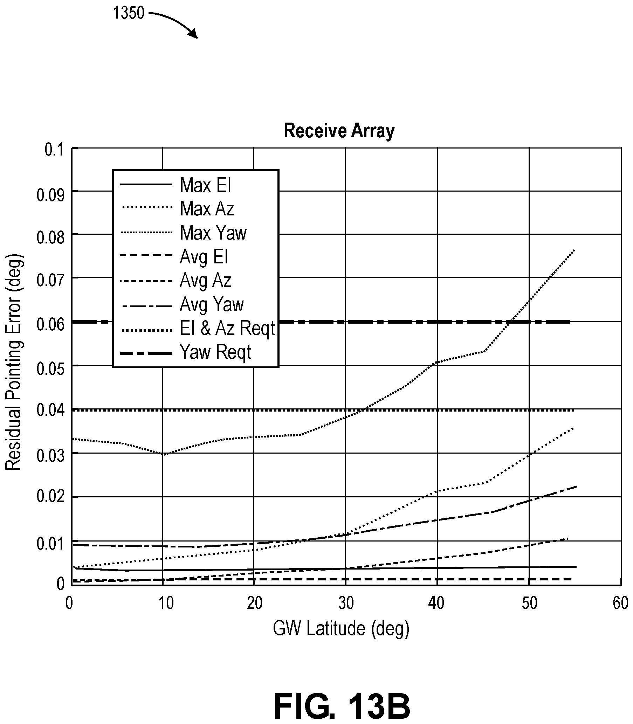

Figure 13A illustrates a graph 1300 showing the residual pointing error (in degrees) versus gateway latitude (in degrees) for the transmitter antenna 110A, according to an implementation. Figure 13B illustrates a graph 1350 showing the residual pointing error (in degrees) versus gateway latitude (in degrees) for the receiver antenna 110B, according to an implementation. To generate the graphs 1300, 1350, a parametric sweep of the gateway latitude was run from 0 degrees to 55 degrees in steps of 5 degrees. There were 100 iterations per step. A first spacecraft longitude offset was maintained at a random value between 7 degrees and 12 degrees, and a second spacecraft longitude offset was maintained at a random value between -7 degrees and -12 degrees. As may be seen in graphs 1300 and 1350, the residual pointing error target/goals (e.g., 0.04 degrees elevation, 0.04 degrees azimuth, and 0.06 degrees yaw) are represented by the horizontal lines. The target/goal may be achieved for a wide variety of gateway latitude locations.

The method 500 may also include transmitting a signal from the computing system 1400 at the gateway to the spacecraft 100 that causes the spacecraft 100 to move to reduce the pointing error, as at 522. In one example, the signal may cause the spacecraft 100 to physically roll, pitch, and/or yaw to reduce the pointing error. In another example, the signal may be received by the DSP 124 on the spacecraft 100, and the DSP 124 may then re-point the phase array elements electronically (e.g., not physically) to adjust for (reduce) the pointing error. The signal may be based upon the intersection(s) at 520.

In an example, the gateway location has a latitude of 21.66 degrees and a longitude of -158.05 degrees. The spacecraft longitude offset 1 is random between 7 degrees and 12 degrees, and the spacecraft longitude offset 2 is random between -7 degrees and -12 degrees. The yaw rotation is 0.36 degree per degree of longitude. There is a random fixed pointing error of up to 1.9 degrees in roll, pitch, and yaw. In addition, there is a random transmitter and receiver pointing skew of up to 0.1 degree in roll, pitch, and yaw. The phase measurements are performed using the same portion of the method 500 described above. The simulated measurement phase variation is 2 degrees RMS. This assumes a calibrated array (e.g., timed aligned and phased aligned). The simulation was also run with 6 degrees RMS. The transmitter frequency was 18.95 GHz, and the receiver frequency was 28.75 GHz. Ten measurements were taken at each spacecraft location. As described above, this may be repeated multiple (e.g., 4) times throughout the day at various drive levels to average out diurnal and/or temperature errors. The spacecraft state vector telemetry may provide spacecraft location and attitude, which may be used to compensate the measurements.

Figure 14 illustrates a schematic view of a computing system 1400 for performing at least a portion of the method 500. The computing system 1400 includes a computer or computer system 1401A, which may be an individual computer system 1401A or an arrangement of distributed computer systems. The computer system 1401A includes one or more analysis modules 1402 that are configured to perform various tasks according to some implementations, such as one or more methods disclosed herein. To perform these various tasks, the analysis module 1402 executes independently, or in coordination with, one or more processors 1404, which is (or are) connected to one or more storage media 1406. The processor(s) 1404 is (or are) also connected to a network interface 1407 to allow the computer system 1401A to communicate over a data network 1409 with one or more additional computer systems and/or computing systems, such as 1401B, 1401C, and/or 1401D (note that computer systems 1401B, 1401C and/or 1401D may or may not share the same architecture as computer system 1401A, and may be located in different physical locations, e.g., computer systems 1401A and 1401B may be located in a processing facility, while in communication with one or more computer systems such as 1401C and/or 1401D that are located in one or more data centers, and/or located in varying countries on different continents).

A processor may include a microprocessor, microcontroller, processor module or subsystem, programmable integrated circuit, programmable gate array, or another control or computing device.

The storage media 1406 may be implemented as one or more computer-readable or machine-readable storage media. Note that while in the example implementation of Figure 14 storage media 1406 is depicted as within computer system 1401A, in some implementations, storage media 1406 may be distributed within and/or across multiple internal and/or external enclosures of computing system 1401A and/or additional computing systems. Storage media 1406 may include one or more different forms of memory including semiconductor memory devices such as dynamic or static random access memories (DRAMs or SRAMs), erasable and programmable read-only memories (EPROMs), electrically erasable and programmable read-only memories (EEPROMs) and flash memories, magnetic disks such as fixed, floppy and removable disks, other magnetic media including tape, optical media such as compact disks (CDs) or digital video disks (DVDs), BLURAY^{®} disks, or other types of optical storage, or other types of storage devices. Note that the instructions discussed above may be provided on one computer-readable or machine-readable storage medium, or may be provided on multiple computer-readable or machine-readable storage media distributed in a large system having possibly plural nodes. Such computer-readable or machine-readable storage medium or media is (are) considered to be part of an article (or article of manufacture). An article or article of manufacture may refer to any manufactured single component or multiple components. The storage medium or media may be located either in the machine running the machine-readable instructions, or located at a remote site from which machine-readable instructions may be downloaded over a network for execution.

Computing system 1400 contains one or more antenna calibration module(s) 1408 that perform at least a portion of the method 500 disclosed herein. It should be appreciated that computing system 1400 is merely one example of a computing system, and that computing system 1400 may have more or fewer components than shown, may combine additional components not depicted in the example implementation of Figure 14, and/or computing system 1400 may have a different configuration or arrangement of the components depicted in Figure 14. The various components shown in Figure 14 may be implemented in hardware, software, or a combination of both hardware and software, including one or more signal processing and/or application specific integrated circuits.

Further, the steps in the processing methods described herein may be implemented by running one or more functional modules in information processing apparatus such as general purpose processors or application specific chips, such as ASICs, FPGAs, PLDs, or other appropriate devices. These modules, combinations of these modules, and/or their combination with general hardware are included within the scope of the present disclosure.

Computational interpretations, models, and/or other interpretation aids may be refined in an iterative fashion; this concept is applicable to the methods discussed herein. This may include use of feedback loops executed on an algorithmic basis, such as at a computing device (e.g., computing system 1400, Figure 14), and/or through manual control by a user who may make determinations regarding whether a given step, action, template, model, or set of curves has become sufficiently accurate for the evaluation of the subsurface three-dimensional geologic formation under consideration.

Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in their respective testing measurements. Moreover, all ranges disclosed herein are to be understood to encompass any and all sub-ranges subsumed therein.

## Claims

1. A method (500) implemented through a computer system (1400) at a gateway on the ground for calibrating an antenna (110A) located on a spacecraft (100), comprising:
receiving a plurality of signals transmitted from the antenna (110A), wherein the antenna (110A) comprises a plurality of phase array elements;
determining a phase tilt of the phase array elements based at least partially upon the signals;
determining a first location of the spacecraft (100), a first attitude of the spacecraft (100), or both;
removing a first portion from the determined phase tilt, wherein the first portion is caused by the first location of the spacecraft (100), the first attitude of the spacecraft (100), or both;
estimating the phase tilt of the phase array elements after the first portion is removed;
generating a reference tilt matrix for the phase array elements;
comparing the estimated phase tilt to the reference tilt matrix; and
determining a pointing error of the antenna (1 10A) based at least partially upon the comparison.

2. The method of claim 1, wherein each of the signals comprises a tone at a different frequency.

3. The method of claims 1 or 2, wherein the first location of the spacecraft (100), the first attitude of the spacecraft (100), or both are measured by one or more sensors onboard the spacecraft (100) and transmitted to a computing system (1400) at a gateway on the ground.

4. The method of any one of claims 1-3, wherein the first portion is removed to isolate a misalignment error (1002, 1004) of the antenna.

5. The method of any one of claims 1-4, further comprising removing a second portion from the determined phase tilt that is caused by a delay error from a processor (124) on the spacecraft (100), wherein the phase tilt is estimated after the first portion and the second portion are removed.

6. The method of any one of claims 1-5, wherein the reference tilt matrix is generated based at least partially upon the first location of the spacecraft (100) and a second location of the spacecraft (100), and wherein the second location of the spacecraft (100) occurs after the first location of the spacecraft (100).

7. The method of claim 6, wherein comparing the estimated phase tilt to the reference tilt matrix produces a first set of misalignment errors (1002) that match the estimated phase tilt for the first location and a second set of misalignment errors (1004) that match the estimated phase tilt for the second location.

8. The method of claim 7, wherein determining the pointing error of the antenna (110A) comprises determining an intersection (1006) of the first set of misalignment errors and the second set of misalignment errors.

9. The method of any one of claims 1-8, further comprising calibrating the antenna (110A) to reduce the pointing error.

10. The method of claim 9, wherein calibrating the antenna (110A) comprises causing the spacecraft (100) to physically or electronically roll, pitch, yaw, or a combination thereof.

11. A computing system (1400) at a gateway on the ground, comprising:
one or more processors (1404); and
a memory system comprising one or more non-transitory computer-readable media storing instructions that, when executed by at least one of the one or more processors, cause the computing system to perform operations, the operations comprising:
receiving a plurality of signals transmitted from an antenna (110A) located on a spacecraft (100), wherein the antenna (110A) comprises a plurality of phase array elements;
determining a phase tilt of the phase array elements based at least partially upon the signals;
determining a first location of the spacecraft (100), a first attitude of the spacecraft (100), or both;
removing a first portion from the determined phase tilt, wherein the first portion is caused by the first location of the spacecraft (100), the first attitude of the spacecraft (100), or both;
estimating the phase tilt of the phase array elements after the first portion is removed;
generating a reference tilt matrix for the phase array elements;
comparing the estimated phase tilt to the reference tilt matrix; and
determining a pointing error of the antenna (1 10A) based at least partially upon the comparison.

12. The computing system of claim 11, wherein the operations further comprise removing a second portion from the determined phase tilt that is caused by a delay error from a processor on the spacecraft (100), and wherein the phase tilt of the phase array elements is estimated after the first portion and the second portion are removed.

13. The computing system of claims 11, wherein the reference tilt matrix is generated based at least partially upon the first location of the spacecraft (100) and a second location of the spacecraft (100), wherein the second location of the spacecraft(100) occurs after the first location of the spacecraft (100).

14. The computing system of claim 13, wherein comparing the estimated phase tilt to the reference tilt matrix produces a first set of misalignment errors (1002) that match the estimated phase tilt for the first location and a second set of misalignment errors (1004) that match the estimated phase tilt for the second location.

15. The computing system of claim 14, wherein determining the pointing error of the antenna (110A) comprises determining an intersection (1006) of the first set of misalignment errors and the second set of misalignment errors.

## Patentansprüche

1. Verfahren (500), das durch ein Computersystem (1400) an einem Gateway auf dem Boden zum Kalibrieren einer auf einem Raumfahrzeug (100) angeordneten Antenne (110A) implementiert ist, aufweisend:
Empfangen einer Vielzahl von Signalen, die von der Antenne (10A) übertragen werden, wobei die Antenne (110A) eine Vielzahl von Phasenanordnungselementen aufweist;
Bestimmen einer Phasenneigung der Phasenanordnungselemente zumindest teilweise basierend auf den Signalen;
Bestimmen eines ersten Orts des Raumfahrzeugs (100), einer ersten Lage des Raumfahrzeugs (100), oder beides;
Entfernen eines ersten Abschnitts aus der bestimmten Phasenneigung, wobei der erste Abschnitt durch den ersten Ort des Raumfahrzeugs (100), die erste Lage des Raumfahrzeugs (100) oder beides verursacht wird;
Schätzen der Phasenneigung der Phasenanordnungselemente, nachdem der erste Abschnitt entfernt wurde;
Erzeugen einer Referenzneigungsmatrix für die Phasenanordnungselemente;
Vergleichen der geschätzten Phasenneigung mit der Referenzneigungsmatrix; und
Bestimmen eines Ausrichtungsfehlers der Antenne (110A) zumindest teilweise basierend auf dem Vergleich.

2. Verfahren nach Anspruch 1, wobei jedes der Signale einen Ton mit einer unterschiedlichen Frequenz aufweist.

3. Verfahren nach Anspruch 1 oder 2, wobei der erste Ort des Raumfahrzeugs (100), die erste Lage des Raumfahrzeugs (100) oder beide von einem oder mehreren Sensoren an Bord des Raumfahrzeugs (100) gemessen und an ein Computersystem (1400) an einem Gateway auf dem Boden übertragen werden.

4. Verfahren nach einem der Ansprüche 1-3, wobei der erste Abschnitt entfernt wird, um einen Ausrichtungsfehler (1002, 1004) der Antenne zu isolieren.

5. Verfahren nach einem der Ansprüche 1-4, des Weiteren aufweisend das Entfernen eines zweiten Abschnitts aus der bestimmten Phasenneigung, die durch einen Verzögerungsfehler eines Prozessors (124) auf dem Raumfahrzeug (100) verursacht wird, wobei die Phasenneigung geschätzt wird, nachdem der erste Abschnitt und der zweite Abschnitt entfernt wurden.

6. Verfahren nach einem der Ansprüche 1-5, wobei die Referenz-Neigungsmatrix zumindest teilweise auf der Grundlage eines ersten Orts des Raumfahrzeugs (100) und eines zweiten Orts des Raumfahrzeugs (100) erzeugt wird, wobei der zweite Ort des Raumfahrzeugs (100) nach dem ersten Ort des Raumfahrzeugs (100) auftritt.

7. Verfahren nach Anspruch 6, wobei das Vergleichen der geschätzten Phasenneigung mit der Referenz-Neigungsmatrix einen ersten Satz von Ausrichtungsfehlern (1002) erzeugt, der mit der der geschätzten Phasenneigung für den ersten Ort übereinstimmt, und einen zweiten Satz von Ausrichtungsfehlern (1004), der mit der geschätzten Phasenneigung für den zweiten Ort übereinstimmt.

8. Verfahren nach Anspruch 7, wobei das Bestimmen des Ausrichtungsfehlers der Antenne (110A) das Bestimmen eines Schnittpunkts (1006) des ersten Satzes von Ausrichtungsfehlern und des zweiten Satzes von Ausrichtungsfehlern aufweist.

9. Verfahren nach einem der Ansprüche 1-8, des Weiteren aufweisend das Kalibrieren der Antenne (110A), um den Ausrichtungsfehler zu reduzieren.

10. Verfahren nach Anspruch 9, wobei das Kalibrieren der Antenne (110A) das Bewirken aufweist, dass das Raumfahrzeug (100) physikalisch oder elektronisch rollt, nickt, giert oder eine Kombination davon.

11. Computersystem (1400) an einem Gateway auf dem Boden, das aufweist:
einen oder mehrere Prozessoren (1404); und
ein Speichersystem, das ein oder mehrere nicht-flüchtige computerlesbare Medien aufweist, die Befehle speichern, die, wenn sie von mindestens einem der ein oder mehreren Prozessoren ausgeführt werden, das Computersystem veranlassen, Vorgänge auszuführen, wobei die Vorgänge aufweisen:
Empfangen einer Mehrzahl von Signalen, die von einer an einem Raumfahrzeug angeordneten Antenne (110A) empfangen werden, wobei die Antenne (110A) eine Mehrzahl von Phasenanordnungselementen aufweist;
Bestimmen einer Phasenneigung der Phasenanordnungselemente basierend zumindest teilweise auf den Signalen;
Bestimmen eines ersten Orts des Raumfahrzeugs (100), einer ersten Lage des Raumfahrzeugs (100) oder beides;
Entfernen eines ersten Abschnitts aus der bestimmten Phasenneigung, wobei der erste Abschnitt durch den ersten Ort des Raumfahrzeugs (100), die erste Lage des Raumfahrzeugs (100) oder beides verursacht wird;
Schätzen der Phasenneigung der Phasenanordnungselemente, nachdem der erste Abschnitt entfernt wurde;
Erzeugen einer Referenzneigungsmatrix für die Phasenanordnungselemente;
Vergleichen der geschätzten Phasenneigung mit der Referenzneigungsmatrix; und
Bestimmen eines Ausrichtungsfehlers der Antenne (110A) basierend zumindest teilweise auf dem Vergleich.

12. Computersystem nach Anspruch 11, wobei die Vorgänge des Weiteren aufweisen das Entfernen eines zweiten Abschnitts aus der bestimmten Phasenneigung, der durch einen Verzögerungsfehler eines Prozessors auf dem Raumfahrzeug (100) verursacht wird, und wobei die Phasenneigung der Phasenanordnungselemente geschätzt wird, nachdem der erste Abschnitt und der zweite Abschnitt entfernt worden sind.

13. Computersystem nach Anspruch 11, wobei die Referenzneigungsmatrix zumindest teilweise basierend auf dem ersten Ort des Raumfahrzeugs (100) und einem zweiten Ort des Raumfahrzeugs (100) erzeugt wird, wobei der zweite Ort des Raumfahrzeugs (100) nach dem ersten Ort des Raumfahrzeugs (100) auftritt.

14. Computersystem nach Anspruch 13, wobei der Vergleich der geschätzten Phasenneigung mit der Referenzverschiebungsmatrix einen ersten Satz von Ausrichtungsfehlern (1002) erzeugt, die mit der geschätzten Phasenverschiebung für den ersten Ort übereinstimmen, und einen zweiten Satz von Ausrichtungsfehlern (1004), die mit der geschätzten Phasenneigung für den zweiten Ort übereinstimmen.

15. Computersystem nach Anspruch 14, wobei das Bestimmen des Ausrichtungsfehlers der der Antenne (110A) das Bestimmen eines Schnittpunkts (1006) aus dem ersten Satz von Ausrichtungsfehlern und dem zweiten Satz von Ausrichtungsfehlern aufweist.

## Revendications

1. Procédé (500) mis en oeuvre au moyen d'un système informatique (1400) au niveau d'une passerelle au sol pour l'étalonnage d'une antenne (110A) située sur un engin spatial (100), comprenant :
la réception d'une pluralité de signaux transmis à partir de l'antenne (110A), dans lequel l'antenne (110A) comprend une pluralité d'éléments de réseau de phase ;
la détermination d'une inclinaison de phase des éléments de réseau de phase sur la base au moins en partie des signaux ;
la détermination d'un premier emplacement de l'engin spatial (100), une première altitude de l'engin spatial (100), ou les deux ;
l'élimination d'une première partie de l'inclinaison de phase déterminée, dans lequel la première partie est provoquée par le premier emplacement de l'engin spatial (100), la première altitude de l'engin spatial (100), ou les deux ;
l'estimation de l'inclinaison de phase des éléments de réseau de phase après que la première partie est éliminée ;
la génération d'une matrice d'inclinaison de référence pour les éléments de réseau de phase ;
la comparaison de l'inclinaison de phase estimée à la matrice d'inclinaison de référence ; et
la détermination d'une erreur de pointage de l'antenne (110A) sur la base au moins en partie de la comparaison.

2. Procédé selon la revendication 1, dans lequel chacun des signaux comprend une tonalité à une fréquence différente.

3. Procédé selon la revendication 1 ou 2, dans lequel le premier emplacement de l'engin spatial (100), la première altitude de l'engin spatial (100), ou les deux sont mesurés par un ou plusieurs capteurs à bord de l'engin spatial (100) et transmis à un système informatique (1400) au niveau d'une passerelle au sol.

4. Procédé selon l'une quelconque des revendications 1-3, dans lequel la première partie est éliminée pour isoler une erreur de désalignement (1002, 1004) de l'antenne.

5. Procédé selon l'une quelconque des revendications 1-4, comprenant en outre l'élimination d'une seconde partie de l'inclinaison de phase déterminée qui est provoquée par une erreur de retard provenant d'un processeur (124) sur l'engin spatial (100), dans lequel l'inclinaison de phase est estimée après que la première partie et la seconde partie sont éliminées.

6. Procédé selon l'une quelconque des revendications 1-5, dans lequel la matrice d'inclinaison de référence est générée sur la base au moins en partie du premier emplacement de l'engin spatial (100) et d'un second emplacement de l'engin spatial (100), et dans lequel le second emplacement de l'engin spatial (100) survient après le premier emplacement de l'engin spatial (100).

7. Procédé selon la revendication 6, dans lequel la comparaison de l'inclinaison de phase estimée à la matrice d'inclinaison de référence produit un premier ensemble d'erreurs de désalignement (1002) qui correspond à l'inclinaison de phase estimée pour le premier emplacement et un second ensemble d'erreurs de désalignement (1004) qui correspond à l'inclinaison de phase estimée pour le second emplacement.

8. Procédé selon la revendication 7, dans lequel la détermination de l'erreur de pointage de l'antenne (110A) comprend la détermination d'une intersection (1006) du premier ensemble d'erreurs de désalignement et du second ensemble d'erreurs de désalignement.

9. Procédé selon l'une quelconque des revendications 1-8, comprenant en outre l'étalonnage de l'antenne (110A) pour réduire l'erreur de pointage.

10. Procédé selon la revendication 9, dans lequel l'étalonnage de l'antenne (110A) comprend le fait d'amener l'engin spatial (100) à effectuer physiquement ou électroniquement un roulis, un tangage, un lacet, ou une combinaison de ceux-ci.

11. Un système informatique (1400) au niveau d'une passerelle au sol, comprenant :
un ou plusieurs processeurs (1404) ; et
un système de mémoire comprenant un ou plusieurs supports non transitoires lisibles par ordinateur stockant des instructions qui, quand elles sont exécutées par au moins un des un ou plusieurs processeurs, amènent le système informatique à réaliser des opérations, les opérations comprenant :
la réception d'une pluralité de signaux transmis à partir de l'antenne (110A) située sur un engin spatial (100), dans lequel l'antenne (110A) comprend une pluralité d'éléments de réseau de phase ;
la détermination d'une inclinaison de phase des éléments de réseau de phase sur la base au moins en partie des signaux ;
la détermination d'un premier emplacement de l'engin spatial (100), une première altitude de l'engin spatial (100), ou les deux ;
l'élimination d'une première partie de l'inclinaison de phase déterminée, dans lequel la première partie est provoquée par le premier emplacement de l'engin spatial (100), la première altitude de l'engin spatial (100), ou les deux ;
l'estimation de l'inclinaison de phase des éléments de réseau de phase après que la première partie est éliminée ;
la génération d'une matrice d'inclinaison de référence pour les éléments de réseau de phase ;
la comparaison de l'inclinaison de phase estimée à la matrice d'inclinaison de référence ; et
la détermination d'une erreur de pointage de l'antenne (110A) sur la base au moins en partie de la comparaison.

12. Système informatique selon la revendication 11, dans lequel les opérations comprennent en outre l'élimination d'une seconde partie de l'inclinaison de phase déterminée qui est provoquée par une erreur de retard provenant d'un processeur sur l'engin spatial (100), et dans lequel l'inclinaison de phase des éléments de réseau de phase est estimée après que la première partie et la seconde partie sont éliminées.

13. Système informatique selon la revendication 11, dans lequel la matrice d'inclinaison de référence est générée sur la base au moins en partie du premier emplacement de l'engin spatial (100) et d'un second emplacement de l'engin spatial (100), dans lequel le second emplacement de l'engin spatial (100) survient après le premier emplacement de l'engin spatial (100).

14. Système informatique selon la revendication 13, dans lequel la comparaison de l'inclinaison de phase estimée à la matrice d'inclinaison de référence produit un premier ensemble d'erreurs de désalignement (1002) qui correspond à l'inclinaison de phase estimée pour le premier emplacement et un second ensemble d'erreurs de désalignement (1004) qui correspond à l'inclinaison de phase estimée pour le second emplacement.

15. Système informatique selon la revendication 14, dans lequel la détermination de l'erreur de pointage de l'antenne (110A) comprend la détermination d'une intersection (1006) du premier ensemble d'erreurs de désalignement et du second ensemble d'erreurs de désalignement.
